# EUROPEAN PATENT SPECIFICATION

(11) **EP 3 578 948 B1**
(45) Date of publication and mention of the grant of the patent: **14.04.2021**
(21) Application number: 18305682.9
(22) Date of filing: 05.06.2018
(51) Int. Cl.: G01M 17/08, B61L 5/04

(54) **TEST BENCH FOR A SWITCH MACHINE AND METHOD FOR TESTING A SWITCH MACHINE**
PRÜFSTAND FÜR EINE WEICHE UND VERFAHREN ZUM TESTEN EINER WEICHE
BANC D'ESSAI POUR UN AIGUILLAGE ET PROCÉDÉ POUR TESTER UNE AIGUILLE

(43) Date of publication of application: 11.12.2019
(73) Proprietor: ALSTOM Transport Technologies, 93400 Saint-Ouen (FR)
(72) Inventor: VENTURI, Valerio, 44042 CENTO (IT)
(74) Representative: Lavoix

(56) References cited:
- CN-A- 101 071 093
- DE-A1-102014 207 457

## Description

The present invention concerns a test bench for a switch machine of a railway switch.

Further, the present invention relates to a method for testing a switch machine.

DE 10 2014 207 457 A1 relates to a test bench for a railway switch. The test bench comprises a switch drive, which is fixed to a support. Further, the switch drive is connected to a shaft, which is connected to a force generator.

CN 101071093 discloses a test method for testing electric switch machines. The test method uses a combination of mechanical and electronic equipments in order to simulate the real switch point machine in-field behaviour. The method should determine the reliability of features of the switch machine. Generally, it is difficult to simulate the kinematic behavior of a switch machine of a railway switch in a degraded situation.

Object of the invention is to provide an improved test bench for a switch machine and an improved method for testing a switch machine.

According to an aspect, a test bench for a railway switch comprising a switch machine is provided, the test bench comprising: a rigid frame adapted to receive the switch machine, the switch machine comprising a switch motor adapted to move a driving shaft; a pair of outer rails fixed to the frame, wherein the switch machine is adapted to be fixed to the outer rails; a pair of inner rails, which are movable with respect to the outer rails between a first end position and a second end position, the inner rails being adapted to be connected to the driving shaft of the switch machine; a braking module connected to the pair of inner rails, the braking module is adapted to generate a braking force that brakes the movement of the inner rails.

Embodiments of the invention may include the following features, which may be combined in any feasible combination:
- the braking module comprises at least one friction pads or pliers adapted to be pressed against the rigid frame:
- the friction pads or pliers are hydraulically moved with respect to the braking module;
- the braking module is adapted to vary the pressure of the friction pads or pliers on a central guide of the rigid frame, the central guide extending along a direction of movement of the inner rails;
- the braking module further includes a sensor for measuring the pressure of the friction pads or pliers on the rigid frame;
- the test bench further comprising a climatic chamber, wherein the rigid frame is arranged;
- the test bench further comprising at least one temperature sensor, wherein the at least one temperature sensor is adapted to sense the temperature of the ambient air, in particular in the climatic chamber, and advantageously the temperature of the outer rails, the casing of the switch motor, the switches of the switch machine, and/or a locking module of the switch machine; and/or
- the switch machine is an in-tie switch machine.
According to a further aspect, the method for monitoring a switch machine of a railway switch in a test bench comprising a rigid frame, a pair of outer rails and a pair of inner rails, which are movable with respect to the outer rails between a first end position and a second end position, the switch machine comprising a switch motor adapted to move a driving shaft, the method comprising:
- fixing the switch machine to the outer rails;
- connecting the linked inner rails to the driving shaft of the switch machine;
- connecting a braking module to the switch blades, the braking module is adapted to generate a braking force that brakes the movement of the switch blades;
- applying a predetermined braking force using the braking module; and commanding the switch machine to move from the first end position to the second end position a predetermined number of times;
- measuring at least one value selected of supply current of the switch motor, supply voltage of the switch motor, torque, number of switches, and temperature of at least one temperature sensor.

So that the manner in which the above recited features of the present invention can be understood in detail, a more particular description of the invention, briefly summarized above, may be read by reference to embodiments. The accompanying drawings relate to embodiments of the invention and are described in the following:
Figure 1 is a schematic drawing of a test bench for a railway switch comprising a switch machine;
Figure 2 is a schematic drawing of a frame of a test bench according to an embodiment of the invention; and
Figure 3 shows a schematic drawing of the frame of the test bench with a braking module.

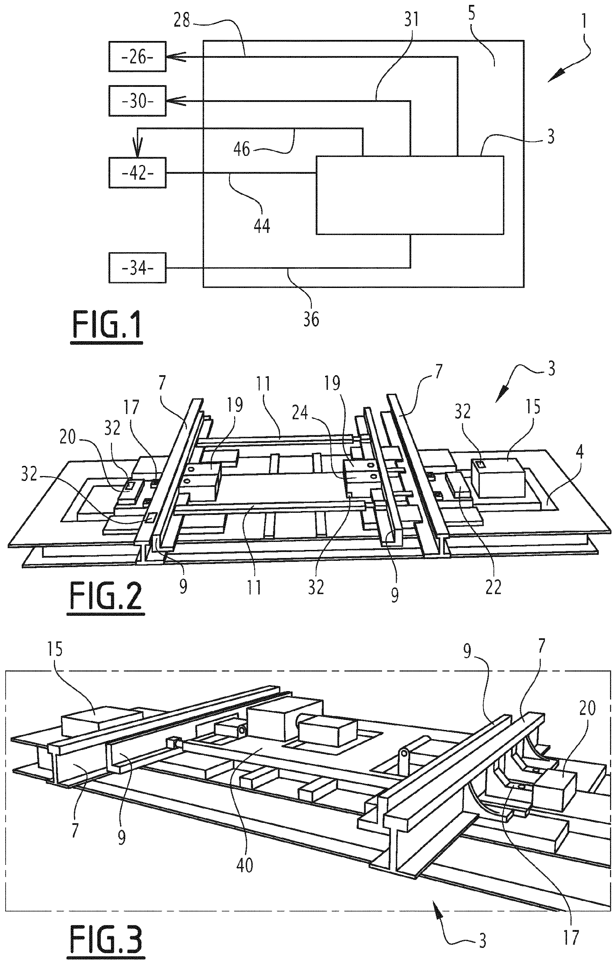

Figure 1 shows schematically a test bench 1 for testing a switch machine of a railway switch. The test bench 1 includes a rigid frame 3 adapted to receive the switch machine in a space 4.

The switch machine comprising a switch motor adapted to move a driving shaft. The switch machine is for example an in-tie switch machine. The rigid frame 3 is rigid enough to avoid bending situation and material deformation due to the switch machine movements.

The rigid frame 3, including the switch machine, may be placed, according to an embodiment into a climatic chamber 5. The climatic chamber is adapted to vary the environmental temperature of the rigid frame. In other embodiments, also the humidity may be regulated in the climatic chamber 5. Thus, real environmental conditions may be simulated with the climatic chamber.

As it can be seen from Figure 2, the rigid frame 3 includes a space 4 for the switch machine, a pair of outer rails 7 and a pair of inner rails or points 9 which are linked by a rigid link 11 so that they are moved together. Further, the links between the inner rails 9 avoid a deformation of the inner rails 9 and misalignment and are used to simulate the infinite length of the rails, in particular during movement of the inner rails 9. The inner rails 9 may be also called switch blades and the outer rails 7 may be also called stock rails.

The outer rails 7 are blocked and cannot be moved. -The inner rails 9 are adapted to be moved between two end positions. At a first end position, one of the inner rails 9 is in contact with a first one of the outer rails 7, and at a second end position, the other one of the inner rails 9, is in contact with the second one of the outer rails 7.

The inner rails 9 are moved by a switch machine 13 mounted in the rigid frame 3, in particular in the space 4. The switch machine 13 includes a motor housing 15 in which a motor is arranged that drives a driving shaft. The switch machine 13 is fixed to the outer rails 7. For example, rail connection elements 17 and fixing screws are used, which are also used in real railway switches. The connection elements 17 may be rail anchor brackets.

The rigid frame makes the installation stable and non-deformable during the movement of the inner rails 9 and due to the different climatic conditions, which may lead to mechanical and thermal deformation.

The driving shaft of the switch machine 13 is fixed to the inner rails 9 via locking modules 19 and 24. The locking modules 19 and 24 are external bracket used to fix the switch machine to the movable inner rails 9.

Further, the switch machine includes LOM switches 20, LM switches 22. LOM and LM indicates the position with respect to the switch motor, namely LOM means opposite motor side, LM means motor side. Further, the switch machine includes end position sensors for detecting the end positions of the inner rails 9.

According to some embodiments, as shown in Figure 1, the test bench includes an interlocking module 26. The interlocking module 26 is electrically connected to the switch machine 13 and controls the switch motor and receives information from the end position sensors, in particular that the inner rails 9 have reached one of the two end positions. For that purpose, the interlocking module 26 is connected via an electric connection 28 to the switch machine 13 in the rigid frame 3. Further, the interlocking module 26 is programmed to move the inner rails automatically between the two end positions. For example, the interlocking module 26 is adapted to stop the movement of the inner rails 9, when an end position is reached as it happens in the reality in-field.

Further, the test bench 1 includes an acquisition module 30. The acquisition module is adapted to receive sensor inputs from the rigid frame 3, in particular via a data or electric connection 31, the switch machine 13, and a braking module as it will be explained later. The test bench 1 may include a plurality of sensors, for example at least one voltage sensor, at least one current sensor, in particular of the power supply to the switch motor, at least one torque sensor, a counter of movements of the inner rails 9, and/or one or more temperature sensors.

As it can be seen from Figure 2, the temperature sensors 32 may be applied on the outer rails 7, on the housing 15, on the housing of the LM switches 22, on the housing of the LOM switches 20, on the housing of the locking modules 19 and 24 and/or in the climatic chamber 5 to measure the ambient air temperature. The one or more temperature sensors 32 may be thermocouples, in particular of the K-type.

The one or more temperature sensors 32 are placed in different positions of the switch machine 13 and the frame 3 in order to acquire the thermal variation due to the temperature variation in the climatic chamber 5. According to embodiments, a temperature sensor for ambient air, in particular placed in the center of the climatic chamber 5, is used as a reference. Thus, the acquisition module 30 is adapted to determine the thermal hysteresis of the material of the switch machine 13 and the frame 3 depending on the position of the temperature sensor, how and how much the temperature changes depending by their position, and/or how much is the variation of the switch machine temperature related to temperature present in the climatic chamber 5.

In an embodiment, the test bench includes a power unit 34 that is adapted to provide electric power to the switch machine 13 via a power connection 36. For example, the power unit 34 may be combined with the interlocking module 26.

According to an embodiment, the test bench may include a braking module 40 rigidly connected to the pair of linked inner rails 9. The braking module 40 is provided to simulate throwing forces and its degradation through a variation of a braking force. For example degradation may be due to long-life installation, severe weather conditions, vibration due to train passages, dust and wear situations, metallic thermal expansion and so on.

For that purpose, the braking module 40 includes at least one friction pad or plier (not shown), in particular two friction pads or pliers, adapted to be pressed against the rigid frame 3. According to an embodiment, these pliers clench a central guide (not shown), for example a ridge, along the direction of movement of the two inner rails 9. Therefore, simply by varying the clamping force applied by these two pliers on the central guide different switch point machine wear states can be simulated.

The two friction pads or pliers are hydraulically moved with respect to rest of the braking module 40 onto the rigid frame 3. For that purpose, the braking module 40 is connected to an actuator and to a measurement module 42. The actuator and measurement module 42 is adapted to control the pressure applied to the rigid frame 3, for example by using a fluid tank with hydraulic fluid, a pump and a valve. The actuator and measurement module 42 is then connected with a fluid connection 44 to the friction pads or pliers. In other words, the braking force depends on the fluid pressure provided by the actuator and measurement module 42. The more pressure is increased, the higher is the braking force provided by the braking module 40 via the friction pads or pliers. Thus, the braking module 40 is adapted to vary the pressure of the friction pads or pliers on the inner rail movement based on the actuator and measurement module 42.

Further, an electric valve may be used in order to direct the hydraulic fluid to one direction or to the other. In other words, one direction of the pressure fluid will be directed in such a way to move the inner rails 9 from one position to the other. Changing the pressure fluid direction the movimentation of the inner rails 9 will be the opposite.

In an embodiment, the braking module 40 further includes a sensor for measuring the pressure of the friction pads or pliers on the rigid frame. For that purpose a load cell, in particular a compression/traction load cell may be used. The pressure sensor may be connected via a connection 46 actuator to the measurement module 42 and/or the acquisition module 30.

According to embodiments, different degraded modes may be simulated with the test bench.

For example a misalignment of movable parts, which may be due to the wear of pivots, brushes, bearings, unscrewing, even partially, of bolts and screws, which makes the coupling between the switch machine 13 and the rails 7, 9 unstable. This may be simulated to loosen predefined screws and bolts of the connection elements 17. For example, only the screws at one outer rail 7 may be loosened for example on the switch motor side or on the opposite side of the switch motor. If a misalignment is produced, the effort needed to complete the movement of the inner rails 9 is higher than the one under normal conditions. The load cell previously defined is used and parameters may be measured by the acquisition module 30.

Another example of a degraded mode is the clearance or loss of adjustment. Due to the wear, components can show loss of material or elastic behavior, so that the movement of the motor provided to the driving shaft is not completely transmitted to the inner rails 9, so that the inner rails 9 cannot complete their stroke.

A further example of a degraded mode may be the use of obstacles placed between the inner rails 9 and the outer rails 7, which is simulated by the use of predefined obstacles. Thus, the presence of dirt, of little obstruction, of ice may be simulated.

Another example of a degraded mode is an increased friction, due to internal causes like wear, corrosion and/or poor lubrication and/or external causes like mud and dust. For example, the braking module may be used for that purpose. By varying the pressure of the hydraulic liquid, different conditions can be studied and different anomalies may be registered by the test bench.

According to an embodiment, a method for testing the switch machine 13 of a railway switch is provided. In a first step the switch machine 13 is fixed to the outer rails 7 and the linked inner rails 9 are connected to the driving shaft of the switch machine 13.

Then, in a further step, the different degraded modes are simulated. For example, the braking module 40 is connected to the pair of linked inner rails 9, the braking module 40 is adapted to generate a braking force that brakes the movement of the linked inner rails 9. In other embodiments, specific bolts or screws are loosened and/or predefined obstacles are placed between the inner rails 9 and the outer rails 7.

According to the invention, the braking module 40 is used and a predetermined braking force is applied in particular by pressing the friction pliers onto the rigid frame 3.

Then, the switch machine 13 is commanded, for example by the interlocking module 26 to move from the first end position to the second end position and back to the first end position a predetermined number of times, in particular to perform a test sequence. For example, the movement may be repeated more than 10000 times, in particular more than 25000 times.

During the movement, at least one value selected of supply current, supply voltage, torque, power, number of movimentation, and temperature of at least one temperature sensor is measured. Further, also the pressure applied by the friction pliers to the rigid frame 3 may be measured.

In a further embodiment, also the temperature and/or the humidity in the climatic chamber 3 may be varied during the test sequence.

According to embodiments, the recorded measurement data may be used to determine the time for a maintenance of the switch machine 13, for example depending on the conditions, in particular physical parameters. In some embodiments trends of system health may be used for that purpose. In some embodiments, the test bench will be used to apply a method for condition-based maintenance, i.e. to decide when to perform preventive maintenance, based on the monitoring of physical parameters and applying advanced signal processing methods to monitor trends of system health and perform prognostics.

According to the invention, it is possible with the test bench 1 to simulate realistic in-field condition, mechanical as well as environmental, in order to be able to acquire main functioning parameter (Voltage, Current, Torque, Power, Manoeuvre count) in laboratory.

According to the invention it is possible to simulate in-laboratory condition closed to the real ones: reproduction of real switch point machine in-field installation conditions; reproduction of real environment condition through a climatic chamber where test bench is installed, reproduction of real forces through an hydraulic braking bench integrated with test bench that will simulate throwing forces and its degradation through a variation of braking force. Further, all the output parameters may be extracted remotely during the test of the switch machine. Considering that the time needed for performing the test cannot be infinite, stressful thermal cycles must be adopted to overstress the point machine in less time than would be needed in-filed.

## Claims

1. Test bench (1) for a switch machine (13) of a railway switch, the test bench (1) comprising:
a rigid frame (3) adapted to receive the switch machine (13), the switch machine comprising a switch motor adapted to move a driving shaft; **characterized in that** the test bench further comprises:
a pair of outer rails (7) fixed to the frame, wherein the switch machine (13) is adapted to be fixed to the outer rails;
a pair of inner rails (9), which are movable with respect to the outer rails (7) between a first end position and a second end position, the inner rails (9) being adapted to be connected to the driving shaft of the switch machine (13); and
a braking module (40) connected to the pair of inner rails (9), the braking module is adapted to generate a braking force that brakes the movement of the inner rails.

2. Test bench for a switch machine of a railway switch according to claim 1, wherein the braking module (40) comprises at least one friction pad or plier adapted to be pressed against the rigid frame (3).

3. Test bench according to claim 2, wherein the friction pads or pliers are hydraulically moved with respect to the braking module (40).

4. Test bench according to claim 2 or 3, wherein the braking module (40) is adapted to vary the pressure of the friction pads or pliers on a central guide of the rigid frame, the central guide extending along a direction of movement of the inner rails.

5. Test bench according to one of the claims 2 to 4, wherein the braking module (40) further includes a sensor for measuring the pressure of the friction pads or pliers on the rigid frame (3).

6. Test bench for a switch machine of a railway switch according to one of the preceding claims, further comprising a climatic chamber (5), wherein the rigid frame (3) is arranged.

7. Test bench for a switch machine (13) of a railway switch according to claim 6, further comprising at least one temperature sensor (32), wherein the at least one temperature sensor is adapted to sense the temperature of the ambient air, in particular in the climatic chamber, and advantageously the temperature of the outer rails, the casing of the switch motor, the switches (20, 22) of the switch machine (13), and/or a locking module (19 and 24) of the switch machine (13).

8. Test bench according to one of the preceding claims, wherein the switch machine (13) is an in-tie switch machine.

9. Method for testing a switch machine (13) of a railway switch in a test bench comprising a rigid frame (3), a pair of outer rails (7) and a pair of inner rails (9), which are movable with respect to the outer rails (7) between a first end position and a second end position, the switch machine comprising a switch motor adapted to move a driving shaft, the method comprising:
- fixing the switch machine (13) to the outer rails (7);
- connecting the linked inner rails (9) to the driving shaft of the switch machine (13);
- connecting a braking module to the switch blades (9), the braking module is adapted to generate a braking force that brakes the movement of the switch blades (9);
- applying a predetermined braking force using the braking module (40); and commanding the switch machine to move from the first end position to the second end position a predetermined number of times;
- measuring at least one value selected of supply current of the switch motor, supply voltage of the switch motor, torque of the switch motor, number of switches, and temperature of at least one temperature sensor.

## Patentansprüche

1. Prüfstand (1) für eine Weichenmaschine (13) einer Schienenweiche, wobei der Prüfstand (1) aufweist:
einen starren Rahmen (3), der eingerichtet ist, die Weichenmaschine (13) aufzunehmen, wobei die Weichenmaschine einen Weichenmotor aufweist, der eingerichtet ist, eine Antriebswelle zu bewegen, **dadurch gekennzeichnet, dass**
der Prüfstand weiter aufweist:
ein Paar äußerer Schienen (7), die an dem Rahmen befestigt sind, wobei die Weichenmaschine (13) eingerichtet ist, um an den äußeren Schienen befestigt zu sein,
ein Paar innerer Schienen (9), die in Bezug auf die äußeren Schienen (7) zwischen einer ersten Endposition und einer zweiten Endposition bewegbar sind, wobei die inneren Schienen (9) so angepasst sind, dass sie mit der Antriebswelle der Weichenmaschine (13) verbunden sind, und
ein Bremsmodul (40), das mit dem Paar innerer Schienen (9) verbunden ist, wobei das Bremsmodul eingerichtet ist, eine Bremskraft zu erzeugen, die die Bewegung der inneren Schienen bremst.

2. Prüfstand für eine Weichenmaschine einer Schienenweiche gemäß Anspruch 1, wobei das Bremsmodul (40) zumindest eine Reibauflage oder Zange aufweist, die eingerichtet ist, um gegen den starren Rahmen (3) gedrückt zu werden.

3. Prüfstand gemäß Anspruch 2, wobei die Reibauflagen oder Zangen in Bezug auf das Bremsmodul (40) hydraulisch bewegt werden.

4. Prüfstand gemäß Anspruch 2 oder 3, wobei das Bremsmodul (40) eingerichtet ist, um den Druck der Reibauflagen oder Zangen auf eine zentrale Führung des starren Rahmens zu verändern, wobei sich die zentrale Führung entlang einer Bewegungsrichtung der inneren Schienen erstreckt.

5. Prüfstand gemäß einem der Ansprüche 2 bis 4, wobei das Bremsmodul (40) ferner einen Sensor zum Messen des Drucks der Reibauflagen oder Zangen auf den starren Rahmen (3) aufweist.

6. Prüfstand für eine Weichenmaschine einer Schienenweiche gemäß einem der vorhergehenden Ansprüche, ferner eine Klimakammer (5) aufweisend, in der der starre Rahmen (3) angeordnet ist.

7. Prüfstand für eine Weichenmaschine (13) einer Schienenweiche gemäß Anspruch 6, ferner zumindest einen Temperatursensor (32) aufweisend, wobei der zumindest eine Temperatursensor eingerichtet ist, die Temperatur von Umgebungsluft, insbesondere in der Klimakammer, und vorteilhaft die Temperatur der äußeren Schienen, des Gehäuses des Weichenmotors, der Schalter (20, 22) der Weichenmaschine (13) und/oder eines Verriegelungsmoduls (19 und 24) der Weichenmaschine (13) zu erfassen.

8. Prüfstand gemäß einem der vorhergehenden Ansprüche, wobei die Weichenmaschine (13) eine In-Schwelle-Weichenmaschine ist.

9. Verfahren zum Testen einer Weichenmaschine (13) einer Schienenweiche in einem Prüfstand, der einen starren Rahmen (3), ein Paar äußerer Schienen (7) und ein Paar innerer Schienen (9) aufweist, die in Bezug auf die äußeren Schienen (7) zwischen einer ersten Endposition und einer zweiten Endposition bewegbar sind, wobei die Weichenmaschine einen Weichenmotor aufweist, der zum Bewegen einer Antriebswelle eingerichtet ist, wobei das Verfahren aufweist:
- Befestigen der Weichenmaschine (13) an den äußeren Schienen (7),
- Verbinden der verbundenen inneren Schienen (9) mit der Antriebswelle der Weichenmaschine (13),
- Verbinden eines Bremsmoduls mit den Weichenzungen (9), wobei das Bremsmodul eingerichtet ist, eine Bremskraft zu erzeugen, die die Bewegung der Weichenzungen (9) bremst,
- Anlegen einer vorbestimmten Bremskraft unter Verwendung des Bremsmoduls (40) und Befehlen der Weichenmaschine, sich eine vorbestimmte Anzahl von Malen von der ersten Endposition in die zweite Endposition zu bewegen,
- Messen zumindest eines Wertes, der ausgewählt ist aus Versorgungsstrom des Weichenmotors, Versorgungsspannung des Weichenmotors, Drehmoment des Weichenmotors, Anzahl der Schaltvorgänge und Temperatur von zumindest einem Temperatursensor.

## Revendications

1. Banc d'essai (1) destiné à un appareil de commutation (13) d'un aiguillage ferroviaire, le banc d'essai (1) comprenant :
une structure rigide (3) adaptée pour recevoir l'appareil de commutation (13), l'aiguillage comprenant un moteur d'aiguille adapté pour déplacer un arbre d'entraînement ; **caractérisé en ce que** le banc d'essai comprend en outre :
une paire de rails externes (7) fixés sur la structure, dans lequel l'appareil de commutation (13) est adapté pour être fixé sur les rails externes ;
une paire de rails internes (9), qui sont mobiles par rapport aux rails externes (7) entre une première position finale et une seconde position finale, les rails internes (9) étant adaptés pour être reliés à l'arbre d'entraînement de l'appareil de commutation (13) ; et
un module de freinage (40) relié à la paire de rails internes (9), le module de freinage étant adapté pour générer une force de freinage qui freine le mouvement des rails internes.

2. Banc d'essai destiné à un appareil de commutation selon la revendication 1, dans lequel le module de freinage (40) comprend au moins une plaquette de frein ou une pince adaptée pour être appuyée contre la structure rigide (3).

3. Banc d'essai selon la revendication 2, dans lequel les plaquettes de frein ou les pinces sont déplacées hydrauliquement par rapport au module de freinage (40).

4. Banc d'essai selon la revendication 2 ou 3, dans lequel le module de freinage (40) est adapté pour faire varier la pression des plaquettes de frein ou des pinces sur un guide central de la structure rigide, le guide central s'étendant le long d'une direction de mouvement des rails internes.

5. Banc d'essai selon l'une des revendications 2 à 4, dans lequel le module de freinage (40) comprend en outre un capteur destiné à mesurer la pression des plaquettes de frein ou des pinces sur la structure rigide (3).

6. Banc d'essai destiné à un appareil de commutation d'un aiguillage ferroviaire selon l'une des revendications précédentes, comprenant en outre un chambre climatique (5), dans laquelle la structure rigide (3) est prévue.

7. Banc d'essai destiné à un appareil de commutation (13) d'un aiguillage ferroviaire selon la revendication 6, comprenant en outre au moins un capteur de température (32), dans lequel le au moins un capteur de température est adapté pour détecter la température de l'air ambiant, en particulier dans la chambre climatique, et, avantageusement, la température des rails externes, du logement du moteur d'aiguille, des aiguilles (20, 22) de l'appareil de commutation (13), et/ou d'un module de verrouillage (19 et 24) de l'appareil de commutation (13).

8. Banc d'essai selon l'une des revendications précédentes, dans lequel l'appareil de commutation (13) est un aiguillage de traverses.

9. Procédé de test d'un appareil de commutation (13) d'un aiguillage ferroviaire sur un banc d'essai comprenant une structure rigide (3), une paire de rails externes (7) et une paire de rails internes (9), qui sont mobiles par rapport aux rails externes (7) entre une première position finale et une seconde position finale, l'appareil de commutation comprenant un moteur d'aiguille adapté pour déplacer un arbre d'entraînement, le procédé comprenant :
- la fixation de l'appareil de commutation (13) sur les rails externes (7) ;
- le raccordement des rails internes reliés (9) à l'arbre d'entraînement de l'appareil de commutation (13) ;
- le raccordement d'un module de freinage aux lames d'aiguille (9), le module de freinage étant adapté pour générer une force de freinage qui freine le mouvement des lames d'aiguille (9) ;
- l'application d'une force de freinage prédéterminée à l'aide du module de freinage (40) ; et la commande de l'aiguille afin de passer de la première position finale à la seconde position finale un nombre de fois prédéterminé ;
- la mesure d'au moins une valeur choisie parmi le courant d'alimentation du moteur d'aiguille, la tension d'alimentation du moteur d'aiguille, le couple du moteur d'aiguille, le nombre d'aiguilles, et la température d'au moins un capteur de température.
